(19) **Europäisches Patentamt / European Patent Office / Office européen des brevets**

(11) **EP 1 697 712 B1**

(12) **FASCICULE DE BREVET EUROPEEN**

(45) Date de publication et mention
de la délivrance du brevet:
**20.08.2008 Bulletin 2008/34**

(21) Numéro de dépôt: **04805574.3**

(22) Date de dépôt: **26.11.2004**

(51) Int Cl.:
***G01M 17/007*** *(2006.01)*

(86) Numéro de dépôt international:
**PCT/FR2004/003048**

(87) Numéro de publication internationale:
**WO 2005/071385 (04.08.2005 Gazette 2005/31)**

(54) **PROCEDE DE DETERMINATION D'UN EFFORT TRANSMIS ENTRE UNE ROUE DE VEHICULE ET UN SUPPORT DE ROUE**

VERFAHREN ZUR BESTIMMUNG EINER ZWISCHEN DEM RAD EINES FAHRZEUGS UND EINEM RADTRÄGER ÜBERTRAGENEN MÜHE

METHOD FOR DETERMINING EFFORT TRANSMITTED BETWEEN THE WHEEL OF A VEHICLE AND A WHEEL SUPPORT

(84) Etats contractants désignés:
**AT BE BG CH CY CZ DE DK EE ES FI FR GB GR HU IE IS IT LI LU MC NL PL PT RO SE SI SK TR**

(30) Priorité: **26.12.2003 FR 0315440**

(43) Date de publication de la demande:
**06.09.2006 Bulletin 2006/36**

(73) Titulaires:
• **Société de Technologie Michelin**
**63000 Clermont-Ferrand (FR)**
• **Michelin Recherche et Technique S.A.**
**1763 Granges-Paccot (CH)**

(72) Inventeurs:
• **FLAMENT, Julien**
**Greer, SC 29650 (US)**
• **ESTOR, Patrice**
**Greer, SC 29650 (US)**
• **EGERSZEGI, Christophe**
**F-63230 Mazaye (FR)**

(74) Mandataire: **Laget, Jean-Loup et al**
**Cabinet PEUSCET**
**161 Rue de Courcelles**
**75017 Paris (FR)**

(56) Documents cités:
**WO-A-01/04589**          **FR-A- 2 819 589**
**US-A- 5 003 819**

**Description**

La présente invention se rapporte au domaine de la conception et de l'évaluation des systèmes de liaison au sol pour véhicule automobile. En particulier, l'invention concerne un procédé de détermination d'un effort transmis entre une roue de véhicule et un support de roue, une utilisation de ce procédé pour déterminer une fonction de transfert d'un véhicule et une utilisation de ce procédé pour prédire la performance confort d'un véhicule.

Dans WO-A-014589, on a décrit une méthode de prévision de la performance confort (niveau de bruit et de vibration) dans l'habitacle d'un véhicule automobile dont les roues sont équipées de pneumatiques. Dans cette méthode, on obtient une fonction de transfert globale permettant de restituer les niveaux de vibration ou de bruit à l'intérieur de l'habitacle du véhicule à partir des efforts mesurés au centre des roues. Cette méthode présente l'avantage général de permettre d'évaluer les performances d'un ensemble roue-pneumatique prototype sur un véhicule donné sans disposer du véhicule, dès lors que la fonction de transfert globale du véhicule a été établie avec un ensemble roue-pneumatique de référence sur un moyen de roulage et que ce même moyen de roulage est employé pour la mesure des efforts au centre roue de l'ensemble roue-pneumatique prototype. Pour cette mesure, il a été proposé de placer la roue de montage sur un moyeu dynamométrique à axe fixe permettant d'enregistrer les efforts au centre de la roue selon trois directions perpendiculaires. Ensuite, les efforts mesurés au centre de roue sont multipliés par la fonction de transfert globale pour obtenir les niveaux de vibration et de bruit à l'intérieur de l'habitacle et ainsi prédire la performance confort du véhicule équipé de l'ensemble roue-pneumatique prototype.

Le document FR-A-2 819 589 décrit une méthode de précision du confort à l'intérieur d'un véhicule. Le document US-A-5 003 819 décrit un simulateur de suspension.

L'invention a pour premier but d'améliorer la précision prédictive d'une telle méthode. L'invention a aussi pour but de déterminer une fonction de transfert rendant plus précisément compte de la réponse du véhicule. L'invention a aussi pour but de fournir une mesure de l'effort transmis entre une roue de véhicule et un support de roue qui puisse être utilisée avec une fonction de transfert du véhicule pour obtenir des prédictions plus précises de sa performance confort.

L'invention est fondée sur le constat que la mesure des efforts au centre de la roue sur un moyeu dynamométrique à axe fixe ne tient pas compte de l'effet de la suspension du véhicule sur les efforts transmis par l'ensemble roue-pneumatique sur le support de roue. Partant de ce constat, l'invention propose un procédé permettant de transformer une mesure des efforts transmis entre la roue et un support fixe en une mesure des efforts transmis entre la roue et un support suspendu tel qu'il se présente sur un véhicule automobile.

Pour cela, l'invention fournit un procédé de détermination d'un effort transmis entre une roue de véhicule et un support de roue, ledit procédé comportant les étapes consistant à :

    monter ladite roue à pivotement sur un support de roue, ladite roue étant munie d'un pneumatique,
    appuyer ledit pneumatique contre un moyen d'excitation, par exemple un volant de roulage,
    mesurer un effort à support fixe qui est transmis entre ladite roue et ledit support de roue lorsqu'on excite ledit pneumatique avec ledit moyen d'excitation, ledit support de roue étant fixé dans au moins une direction par rapport audit moyen d'excitation,
    caractérisé par l'étape consistant à calculer, en fonction dudit effort à support fixe, un effort à support suspendu qui serait transmis entre ladite roue et un support de roue présentant un degré de liberté de suspension dans au moins une dite direction par rapport audit moyen d'excitation.

Ce procédé permet de bénéficier de la simplicité d'une mesure d'effort sur un moyeu dynamométrique à axe fixe tout en modélisant de manière réaliste les efforts qui sont effectivement susceptibles d'être transmis entre la roue et son support lorsque celui-ci présente un ou plusieurs degrés de liberté de suspension, comme c'est le cas dans un système de liaison au sol de véhicule. Le moyen d'excitation peut être tout dispositif permettant de solliciter la bande de roulement pour simuler l'interaction du pneumatique avec un sol irrégulier.

De préférence, ledit effort à support suspendu est calculé en fonction de la masse non suspendue d'un système de liaison au sol incluant l'ensemble roue-pneumatique et un support de roue lié à un dispositif de suspension. La masse non suspendue a un effet global d'inertie qui amortit les hautes fréquences. Cette masse peut dépendre de la direction du degré de liberté de suspension.

Selon un mode de réalisation particulier de l'invention, ledit effort à support suspendu est calculé en fonction d'une fréquence de résonance et/ou d'un coefficient d'amortissement caractéristiques d'un mode propre dudit système de liaison au sol. Cette fréquence de résonance et/ou ce coefficient d'amortissement peuvent dépendre de la direction du degré de liberté de suspension.

De préférence, ledit effort à support suspendu est calculé en fonction d'une raideur et/ou d'un amortissement dudit dispositif de suspension. Cette raideur et/ou cet amortissement peuvent dépendre de la direction du degré de liberté de suspension.

Avantageusement, ledit effort à support suspendu est calculé en fonction d'une raideur et/ou d'un amortissement dudit pneumatique. Cette raideur et/ou cet amortissement peuvent dépendre de la direction du degré de liberté de suspension.

Selon un autre mode de réalisation particulier de l'invention, ledit effort à support suspendu est calculé en fonction d'une fréquence de résonance et/ou d'un coefficient d'amortissement caractéristiques d'un mode propre dudit pneumatique. Cette fréquence de résonance et/ou ce coefficient d'amortissement peuvent dépendre de la direction du degré de liberté de suspension.

Avantageusement, ledit effort à support suspendu est calculé aussi en fonction d'un paramètre de couplage entre ledit mode propre du pneumatique et un déplacement du centre de roue. Ce paramètre de couplage peut dépendre de la direction du degré de liberté de suspension.

De préférence, ledit effort à support suspendu est calculé dans le domaine fréquentiel en multipliant ledit effort à support fixe par une matrice de passage.

Selon un mode de réalisation particulier de l'invention, ladite matrice de passage est diagonale lorsque lesdits efforts sont exprimés dans un repère correspondant aux directions principales du véhicule. Les directions principales du véhicule sont la direction horizontale de roulement, la direction horizontale latérale et la direction verticale.

La dimension de la matrice de passage dépend bien sûr du nombre de composantes d'effort que l'on souhaite calculer. Pour une seule composante d'effort, on peut utiliser un seul coefficient de la matrice, i.e. une fonction de passage scalaire.

Avantageusement, au moins un coefficient diagonal de ladite matrice de passage présente une évolution globalement décroissante au-dessus d'une certaine fréquence. Une telle évolution globalement décroissante traduit l'inertie de la masse non suspendue du système de liaison au sol.

De préférence, au moins un coefficient diagonal de ladite matrice de passage présente un pic au niveau d'une fréquence de résonance du système de liaison au sol.

Avantageusement, au moins un coefficient diagonal de ladite matrice de passage présente, sur une portion du spectre, un minimum et un maximum adjacents qui représentent un décalage fréquentiel d'un mode propre du pneumatique.

L'invention fournit aussi une utilisation du procédé de détermination d'effort ci-dessus pour déterminer une fonction de transfert d'un véhicule équipé d'un système de liaison au sol incluant un support de roue relié à une caisse par l'intermédiaire d'un dispositif de suspension et un ensemble roue-pneumatique de référence monté sur ledit support de roue, caractérisée par les étapes consistant à :

mesurer un niveau de bruit et/ou de vibration à l'intérieur du véhicule lorsque le pneumatique dudit ensemble roue-pneumatique de référence est excité dans des conditions de roulage déterminées,
effectuer le procédé de détermination d'effort avec ledit ensemble roue-pneumatique de référence excité dans lesdites conditions de roulage déterminées pour calculer ledit effort à support suspendu en tant qu'effort transmis entre ledit ensemble roue-pneumatique de référence et ledit support de roue du système de liaison au sol,
déterminer ladite fonction de transfert dans le domaine fréquentiel entre ledit niveau de bruit et/ou de vibration mesuré et ledit effort calculé. Par conditions de roulage, on entend au moins un paramètre choisi dans le groupe constitué de la géométrie de la déformation excitatrice, son spectre, la charge supportée par l'ensemble roue-pneumatique, la vitesse de rotation de l'ensemble roue-pneumatique et la pression de gonflage du pneumatique.

L'invention fournit également une utilisation du procédé de détermination d'effort ci-dessus pour prédire la performance confort d'un véhicule devant être équipé d'un système de liaison au sol incluant un support de roue relié à une caisse par l'intermédiaire d'un dispositif de suspension et un ensemble roue-pneumatique prototype monté sur ledit support de roue, caractérisée par les étapes consistant à :

effectuer le procédé de détermination d'effort avec ledit ensemble roue-pneumatique prototype pour calculer ledit effort à support suspendu en tant qu'effort transmis entre ledit ensemble roue-pneumatique prototype et ledit support de roue du système de liaison au sol,
multiplier ledit effort calculé par une fonction de transfert dudit véhicule dans le domaine fréquentiel pour obtenir un niveau de bruit et/ou de vibration prévu à l'intérieur du véhicule.

De préférence, ladite fonction de transfert est déterminée par utilisation du procédé de détermination d'effort ci-dessus.

L'invention fournit également un appareil de traitement de données, caractérisé par le fait qu'il comporte des moyens de calcul programmés pour mettre en oeuvre un modèle fonctionnel de suspension apte à calculer, en fonction d'un signal d'effort à support fixe représentant un effort transmis entre un support de roue fixé dans au moins une direction par rapport à un moyen d'excitation et une roue de véhicule montée à pivotement sur ledit support de roue et munie d'un pneumatique appuyé contre ledit moyen d'excitation, un signal d'effort à support suspendu représentant un effort qui serait transmis entre ladite roue et un support de roue présentant un degré de liberté de suspension dans au moins une dite direction par rapport audit moyen d'excitation.

L'invention fournit également un programme d'ordinateur comportant des codes d'instructions propres à être lus ou stockés sur un support et aptes à être exécutés par un ordinateur pour mettre en oeuvre un modèle fonctionnel de suspension apte à calculer, à partir d'un signal d'effort à support fixe représentant un effort transmis entre un support de roue fixé dans au moins une direction par rapport à un moyen d'excitation et une roue de véhicule montée à pivotement sur ledit support de roue et munie d'un pneumatique appuyé contre ledit moyen d'excitation, un signal d'effort à support suspendu représentant un effort qui serait transmis entre ladite roue et un support de roue présentant un degré de liberté de suspension dans au moins une dite direction par rapport audit moyen d'excitation.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés. Sur ces dessins :

- la figure 1 est une représentation schématique d'un procédé de mesure de l'effort transmis entre une roue et son support selon l'art antérieur,
- les figures 2 à 4 représentent un modèle fonctionnel d'une suspension interposée entre une roue et la caisse d'un véhicule,
- la figure 5 représente un modèle fonctionnel simplifié d'un pneumatique,
- les figures 6 à 8 représentent des modes propres vibratoires d'un pneumatique,
- les figures 9 à 12 sont des graphes représentant des fonctions de passage obtenues par simulation numérique,
- les figures 13 et 14 sont des graphes représentant l'amplitude et la phase d'un coefficient d'une matrice de passage obtenu par modélisation analytique d'une part et par mesure expérimentale d'autre part,
- la figure 15 est un schéma-bloc représentant un procédé de prédiction de la performance confort d'un véhicule à l'aide d'une fonction de transfert globale.

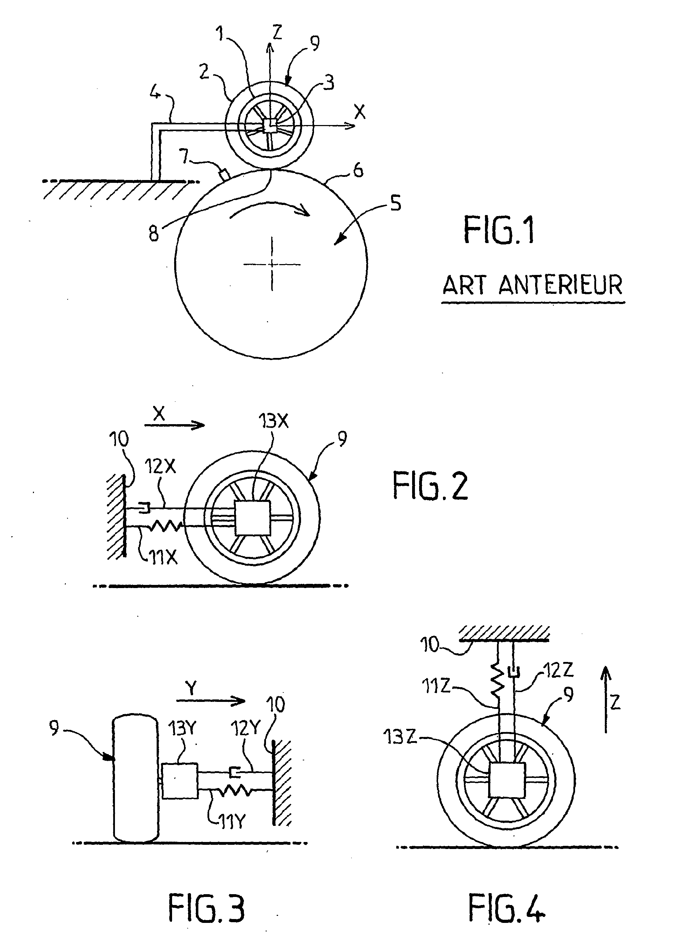

Sur la figure 1, on a représenté un outil de mesure selon l'art antérieur pour mesurer des efforts transmis entre une roue 1 munie d'un pneumatique 2 et son support de roue. Le support de roue est un moyeu 3 qui présente un axe rotatif orienté selon une direction Y perpendiculaire au plan de la figure et qui est lié rigidement à un bâti fixe 4. Ainsi, le seul degré de liberté de la roue 1 est la rotation autour de l'axe du moyeu 3. Le moyeu 3 est un moyeu dynamométrique permettant d'enregistrer les efforts au centre de la roue 1, c'est-à-dire les efforts transmis entre la roue 1 et le moyeu 3, dans les trois directions perpendiculaires X, Y et Z. Le bâti 4 permet d'appliquer une charge donnée sur la roue 1 pour écraser le pneumatique 2 contre un volant 5 qui peut être entraîné en rotation autour de son axe parallèle à la direction Y. La surface périphérique 6 du volant 5 est pourvue d'un obstacle 7 pour engendrer des vibrations dans le pneumatique 2 en déformant son aire de contact 8 lorsque l'ensemble roue-pneumatique 9 constitué de la roue 1 et du pneumatique 2 est mis en rotation par le volant 5.

Les mesures enregistrées avec cet outil rendent imparfaitement compte des efforts qui sont engendrés au centre de roue dans un système de liaison au sol de véhicule automobile car, dans ce cas, le support de roue n'est pas lié à un bâti fixe, il est lié à la caisse du véhicule par l'intermédiaire d'un dispositif de suspension qui présente des degrés de liberté. On connaît de nombreuses structures de suspension. La figure 1 de WO-A-0104589 en donne un exemple non limitatif.

Pour améliorer la prévision des efforts qui sont engendrés au centre de roue dans un système de liaison au sol de véhicule automobile, les inventeurs de la présente demande ont eu l'idée de déterminer comment les efforts que le pneumatique génère sur un support de roue fixe se modifient lorsque le support de roue est suspendu par rapport à la caisse d'un véhicule et de calculer une fonction de passage permettant de passer du résultat d'une mesure effectuée avec l'outil de la figure 1 à une estimation de l'effort au centre de roue tenant compte de l'effet de la suspension. Pour cela, un modèle fonctionnel de suspension a été utilisé. Ce modèle est schématisé sur les figures 2 à 4. Grâce à ses divers paramètres, ce modèle est apte à caractériser essentiellement n'importe quel type de suspension.

Sur les figures 2 à 4, on voit que l'ensemble roue-pneumatique 9 est relié à un bâti 10, qui représente la caisse supposée fixe du véhicule, à chaque fois par un ressort $11i$ en parallèle avec un amortisseur $12i$ ($i$= X, Y, Z) selon chacune des trois directions X, Y et Z. Ainsi, la suspension crée trois degrés de liberté de translation pour le support de roue. L'ensemble roue-pneumatique 9 se voit attribuer une masse supplémentaire 13 située au centre de roue qui représente une masse partielle de la suspension qui s'ajoute à la masse de la roue et à une masse partielle du pneumatique pour former au total la masse non suspendue $M_{NS}$ qui en ressentie au centre de roue lors des mouvements dynamiques.

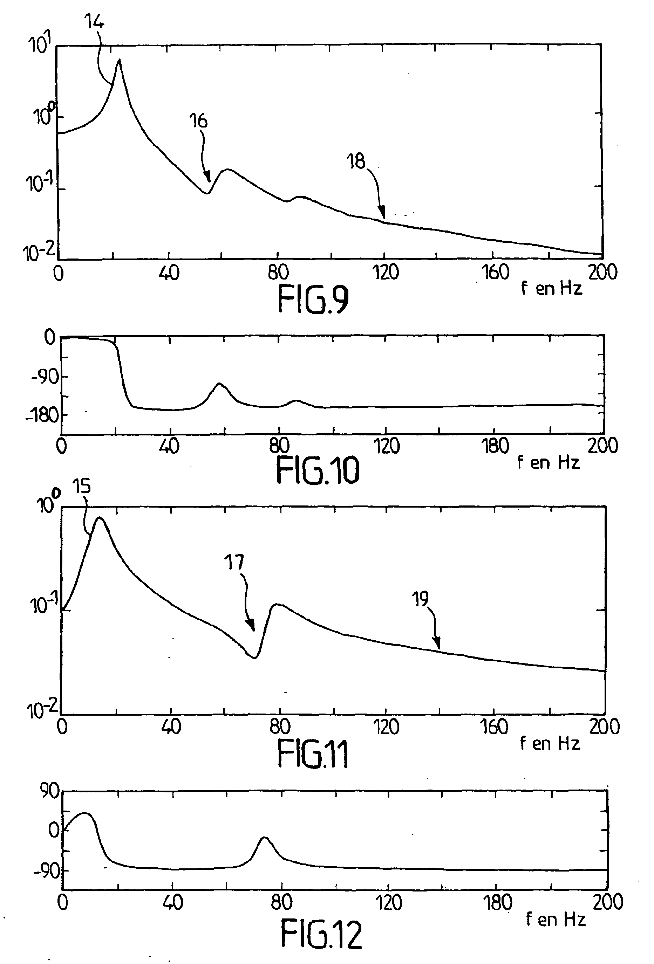

Dans un premier temps, une comparaison des comportements de l'ensemble roue-pneumatique 9 monté sur un support fixe (figure 1) et de l'ensemble roue-pneumatique 9 monté sur un support suspendu (figures 2 à 4) a été réalisée par simulation numérique, la roue étant toujours libre de tourner autour de son axe. A l'aide d'un modèle dynamique sous-structuré détaillé du pneumatique et d'une méthode d'éléments finis, on a déterminé les composantes d'effort selon la direction $i$ ($i$=X, Z) au centre de roue à support de roue fixe en réponse à une déformation excitatrice harmonique ayant une pulsation d'excitation $\omega$ appliquée au niveau de l'aire de contact du pneumatique. Ensuite, pour la même déformation excitatrice, à l'aide d'un modèle dynamique sous-structuré détaillé du pneumatique et de la suspension et d'une méthode d'éléments finis, on a déterminé les composantes d'effort $F_i^{SS}$ selon la direction $i$ ($i$=X, Z) au centre de roue à support de roue suspendu. Les figures 9 à 12 représentent des résultats de cette simulation numérique. Plus précisément, les figures 9 et 10 représentent respectivement l'amplitude (en échelle logarithmique adimensionnelle) et la phase (en degrés) de la fonction de passage complexe $H_{XX}$ définie par la relation :

$$H_{XX}(\omega) = \frac{F_X^{SS}(\omega)}{F_X^{SF}(\omega)}$$

et les figures 11 et 12 représentent respectivement l'amplitude et la phase de la fonction de passage complexe $H_{ZZ}$ définie par la relation :

$$H_{ZZ}(\omega) = \frac{F_Z^{SS}(\omega)}{F_Z^{SF}(\omega)}$$

En abscisse, la fréquence $f$ est définie par $\omega = 2\pi f$.

Ces résultats permettent de constater essentiellement trois effets de la suspension sur les efforts transmis au niveau du centre de roue :

- l'apparition de nouveaux modes propres vibratoires, représentés par les pics 14 et 15 sur les courbes d'amplitude, qui correspondent à des modes résonants de la masse non-suspendue dans la direction considérée, typiquement autour de 15 à 20Hz,
- une interaction entre ces modes propres et les modes propres vibratoires d'ordre 1 du pneumatique, qui voient leur fréquence de résonance modifiée. En particulier, la portion de courbe 16 de la figure 9, respectivement la portion de courbe 17 de la figure 11, présente un minimum suivi immédiatement d'un maximum, ce qui traduit l'augmentation de la fréquence de résonance du mode propre R0.5, respectivement du mode propre R1.0, du pneumatique.
- un effet inertiel global, i.e. un effet d'impédance d'entrée, qui dépend de la masse non suspendue ressentie au centre de roue et qui réduit globalement l'effort transmis au support de roue et accélère la décroissance de l'effort transmis lorsque la fréquence s'accroît, comme représenté par les portions de courbe 18 et 19 sur les figures 9 et 11.
- Au-delà de 100 Hz environ, il n'y a plus de différence de comportement notable entre la roue à support fixe et la roue à support suspendu.

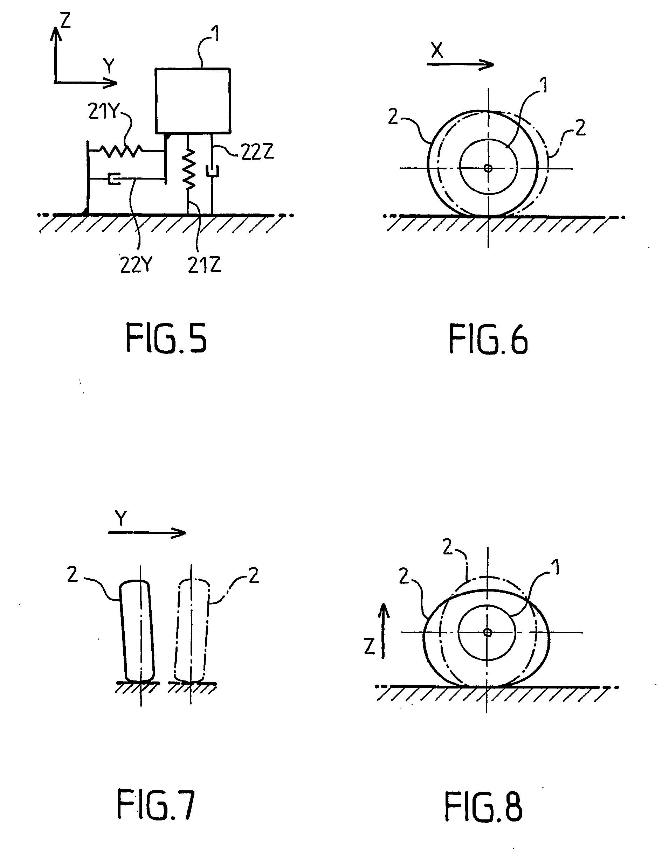

Ainsi, on constate que la suspension rajoute des modes propres de résonance des masses non-suspendues, a un effet inertiel de tassement de l'effort transmis au centre de roue et décale certains modes propres du pneumatique. Les modes décalés sont en fait les modes d'ordre 1 qui présentent un couplage important avec le déplacement du centre de roue. Ces modes d'ordre 1, qui sont bien connus de l'homme du métier, ont été représentés schématiquement sur les figures 6 à 8 par soucis de clarté. La figure 6 représente deux positions extrémales du pneumatique 2 oscillant dans le mode R0.5, qui est le mode d'ordre 1 selon la direction X. La roue 1 est fixe. La figure 7 représente deux positions extrémales du pneumatique 2 oscillant dans le mode T0.5, qui est le mode d'ordre 1 selon la direction Y. La figure 8 représente deux positions extrémales du pneumatique 2 oscillant dans le mode R1.0, qui est le mode d'ordre 1 selon la direction Z.

On notera que l'effort $F^{SS}$ transmis au niveau du centre de roue représente en bonne approximation l'effort qui est transmis entre les organes de suspension et la caisse du véhicule.

On va maintenant exposer des expressions analytiques des fonctions de passage introduites ci-dessus, afin de pouvoir déterminer, à partir des mesures d'effort à support de roue fixe et sans recourir à une simulation numérique complexe et coûteuse, quelles seraient les mesures que l'on obtiendrait à support de roue suspendu.

Sous sa forme générale, la matrice de passage entre les efforts transmis par la roue à un support de roue fixe et les efforts transmis par la roue à un support de roue suspendu, notée **H**, est une matrice 5*5, car les efforts comportent à chaque fois trois composantes de translation et deux composantes de rotation, la roue étant supposée libre de tourner autour de son axe parallèle à la direction Y. La matrice de passage est fondée sur un modèle de système de liaison au sol qui inclut un modèle fonctionnel de pneumatique et un modèle fonctionnel de suspension.

Le pneumatique fait l'objet d'un modélisation sous-structurée de type Craig-Bampton (R.R. Craig, M.C.C. Bampton, « Coupling of Substructures for Dynamic Analysis », AIAA Journal, Vol. 6, juillet 1968). La mise en équation sous-structurée du pneumatique est la suivante :

$$\left( \begin{bmatrix} \Omega_{II}^2 & 0 & 0 \\ 0 & K_{CC} & K_{CA} \\ 0 & K_{CA}^T & K_{AA} \end{bmatrix} + j \begin{bmatrix} H_{II} & H_{IC} & H_{IA} \\ H_{IC}^T & H_{CC} & H_{CA} \\ H_{IA}^T & H_{CA}^T & H_{AA} \end{bmatrix} - \omega^2 \begin{bmatrix} I_{II} & M_{IC} & M_{IA} \\ M_{IC}^T & M_{CC} & M_{CA} \\ M_{IA}^T & M_{CA}^T & M_{AA} \end{bmatrix} \right) \begin{pmatrix} \alpha_I \\ u_C \\ u_A \end{pmatrix} = \begin{pmatrix} 0 \\ F_C \\ F_A \end{pmatrix}$$

où les variables $K$ désignent des matrices de raideur, les variables $H$ désignent des matrices d'amortissement, l'amortissement étant supposé purement hystérétique, et les variables $M$ désignent des matrices de masse ; les indices $I$, $C$ et $A$ désignent respectivement les degrés de liberté modaux, du centre de roue et de l'aire de contact du pneumatique ; $u_A$ désigne un vecteur déplacement de l'aire de contact du pneumatique, $u_C$ désigne un vecteur déplacement du centre de roue, $F_A$ désigne un vecteur d'effort reçu par le pneumatique au niveau de l'aire de contact du pneumatique, et $F_C$ désigne un vecteur d'effort reçu par le pneumatique au niveau du centre de roue, c'est-à-dire l'opposé de l'effort transmis par la roue au support de roue.

Les matrices $K_{CC}$ et $H_{CC}$ représentent une raideur et un amortissement reliant le déplacement du centre de roue à un effort au centre de roue. En d'autres termes, la rigidité dynamique du pneumatique est modélisée, dans chaque direction $i$ ($i$=X, Y, Z), comme un ressort 21i mis en parallèle avec un amortisseur hystérétique 22i entre la roue 1 et le sol, comme schématisé sur la figure 5 (direction X non représentée).

Pour établir l'expression de l'effort $F^{SF}$ transmis par la roue à un support fixe, on tient compte des degrés de liberté qui sont figés, i.e. on impose $u_C$=0.

Pour établir l'expression de l'effort $F^{SS}$ transmis par la roue à un support suspendu, on introduit un modèle linéaire simplifié de suspension, tel que schématisé sur les figures 2 à 4, qui tient compte des degrés de liberté qui ne sont plus figés et qui représente les ressorts, amortisseurs, articulations élastiques et autres organes élastiques de la suspension. L'effort $F^{SS}$ dépend donc du déplacement du centre de roue, qui n'est plus nul, selon la formule :

$$F^{SS} = \left[ K_S + jH_S + j\omega C_S \right] u_C$$

où $K_S$ est une matrice de raideur, $H_S$ est une matrice d'amortissement hystérétique et $C_S$ est une matrice d'amortissement visqueux de la suspension.

Le modèle de suspension comporte également une matrice de masse de suspension au centre de roue, notée $M_S$, et on note $M_{NS}$ la matrice de masse non suspendue totale au niveau du centre de roue, soit :

$$M_{NS} = M_S + M_{CC}$$

On fait l'hypothèse que la déformation du pneumatique dans l'aire de contact est la même sur le support fixe et sur le support suspendu. On obtient alors une expression générale de la matrice de passage :

$$\mathbf{H}(\omega) = \left[ K_S + jH_S + j\omega C_S \begin{bmatrix} K_{CC} + jH_{CC} + K_S + jH_S + j\omega C_S - \omega^2 M_{NS} - \left( jH_{IC}^T - \omega^2 M_{IC}^T \right).. \\ \left( \Omega_{II}^2 + jH_{II} - \omega^2 1_{II} \right)^{-1} \left( jH_{IC} - \omega^2 M_{IC} \right) \end{bmatrix}^{-1} \right]$$

Pour l'utilisation dans une méthode de prévision de la performance confort d'un véhicule automobile avec une fonction de transfert globale, cette expression a été simplifiée par les considérations suivantes :

- la détermination des efforts de translation du centre de roue est suffisante, permettant de réduire la matrice de passage **H** à la dimension 3.
- Il s'est avéré que les termes extra-diagonaux pouvaient être négligés car il y a en général deux ordres de grandeur d'écart entre un terme diagonal et les termes extra-diagonaux pour chaque ligne de la matrice **H**.

- Les matrices de raideur, d'amortissement et de masse pour le pneumatique et pour la suspension sont considérées diagonales.
- Les termes de la matrice **H** relatifs aux modes propres du pneumatique autres que les modes d'ordre 1 susmentionnés sont négligés puisqu'on a observé que seuls ces modes d'ordre 1 étaient affectés de manière significative par la suspension.
- Les termes H$_{IC}$ de couplage entre modes propres du pneumatique et interface au centre de roue ont été négligés.
- L'amortissement de la suspension est considéré purement hystérétique dans les directions X et Y.
- L'amortissement de la suspension dans la direction Z est considéré soit purement hystérétique si l'amortisseur est figé (débattement de suspension trop faible pour faire fonctionner l'amortisseur), soit purement visqueux si l'amortisseur n'est pas figé.
- On suppose que le pneumatique ne présente ni raideur ni amortissement dans la direction X à cause de la liberté de rotation de la roue 1.

Exemple 1

Avec les hypothèses ci-dessus, les trois fonctions de passage, i.e. les termes diagonaux de la matrice de passage **H,** sont obtenus dans le domaine fréquentiel sous la forme :

$$H_{XX}(\omega)=\frac{K_S^X + j\cdot H_S^X}{K_S^X + j\cdot H_S^X - \omega^2 M_{NS}^X - \omega^4 \dfrac{m_{X_{CR}\leftrightarrow r0.5}^2}{\omega_{r0.5}^2 + 2j\xi_{r0.5}\omega_{r0.5}\omega - \omega^2}}$$

$$H_{YY}(\omega)=\frac{K_S^Y + j\cdot H_S^Y}{K_{Y_{CR}Y_{CR}} + K_S^Y + j\cdot H_{Y_{CR}Y_{CR}} + j\cdot H_S^Y - \omega^2 M_{NS}^Y - \omega^4 \dfrac{m_{Y_{CR}\leftrightarrow r0.5}^2}{\omega_{r0.5}^2 + 2j\xi_{r0.5}\omega_{r0.5}\omega - \omega^2}}$$

$$H_{ZZ}(\omega)=\frac{K_S^Z + j\cdot H_S^Z + j\omega\cdot C_S^Z}{K_{Z_{CR}Z_{CR}} + K_S^Z + j\cdot H_{Z_{CR}Z_{CR}} + j\cdot H_S^Z + j\omega\cdot C_S^Z - \omega^2 M_{NS}^Z - \omega^4 \dfrac{m_{Z_{CR}\leftrightarrow R1.0}^2}{\omega_{R1.0}^2 + 2j\xi_{R1.0}\omega_{R1.0}\omega - \omega^2}}$$

Les notations sont les suivantes :

$K_S^i$ désigne la raideur (en N/m) du ressort 11i (i=X, Y, Z).

$H_S^i$ désigne l'amortissement hystérétique (en N/m) de l'amortisseur 12i (i=X, Y, Z).

$C_S^Z$ désigne l'amortissement visqueux (en N.s/m) de l'amortisseur 12Z.

$M_{SN}^i$ désigne un coefficient diagonal de la masse non suspendue totale (i=X, Y, Z), en kg.

$\xi_k$ et $\omega_k$ désignent à chaque fois l'amortissement (en N/m) et la pulsation (en rad/s) associés à un mode propre k d'ordre 1 du pneumatique.

$m_{i\rightarrow}k$ désigne à chaque fois une masse de couplage, en kg$^{1/2}$, entre un degré de liberté i du centre de roue et un mode propre k du pneumatique.

$K_{iCRiCR}$ désigne la raideur (en N/m) du ressort 21i (i=Y, Z) représentant le pneumatique.

$H_{iCRiCR}$ désigne l'amortissement hystérétique (en N/m) de l'amortisseur 22i (i=X, Y, Z) représentant le pneumatique.

$j$ est le nombre complexe $j^2$=-1.

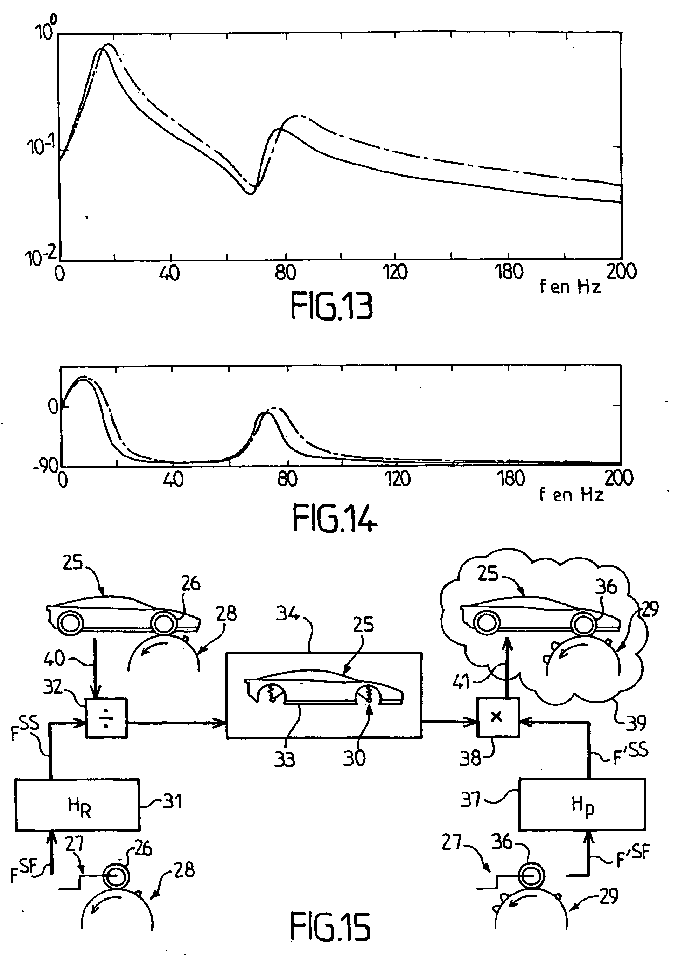

Les figures 13 et 14 représentent un exemple comparatif entre la fonction de passage $H_{ZZ}$ calculée selon l'expression de l'exemple 1, représentée en trait continu, et la même fonction mesurée expérimentalement, représentée en trait mixte. La figure 13 représente l'amplitude de la fonction de passage en échelle logarithmique adimensionnelle et la figure 14 représente sa phase en degrés. On constate que les phénomènes qui avaient été identifiés à l'aide de la simulation numérique, i.e. apparition d'un mode propre à basse fréquence, décalage du mode propre d'ordre 1 du pneumatique et tassement de la réponse à haute fréquence, sont confirmés expérimentalement et sont assez précisément modélisés par l'expression analytique de l'exemple 1. Ce résultat est important car l'expression analytique de la fonction de passage repose sur un nombre assez restreint de paramètres, qu'il est possible de mesurer et d'adapter en fonction du système de liaison au sol que l'on étudie.

Les modes propres des masses non suspendues ont sensiblement comme fréquence propre :

$$2\pi\sqrt{K_S^i \Big/ M_{NS}^i}$$

## Exemple 2

L'expression de l'exemple 1 peut être simplifiée si l'on ne tient pas compte des termes croisés tels que les masses de couplage $m_{k\to k}$. Cette simplification n'entraîne pas de dégradation majeure du résultat. Dans l'exemple 2, l'expression des fonctions de passage est similaire à celle de l'exemple 1, les masses de couplage $m_{k\to k}$ étant remplacées par des constantes ajustées empiriquement.

## Exemple 3

L'expression de l'exemple 1 peut être simplifiée si l'on veut se passer de l'effet de la suspension sur les modes propres du pneumatique. L'expression des fonctions de passage est alors :

$$H_{XX}(\omega) = \frac{K_S^X + j \cdot H_S^X}{K_S^X + j \cdot H_S^X - \omega^2 M_{NS}^X}$$

$$H_{YY}(\omega) = \frac{K_S^Y + j \cdot H_S^Y}{K_S^Y + j \cdot H_S^Y - \omega^2 M_{NS}^Y}$$

$$H_{ZZ}(\omega) = \frac{K_S^Z + j \cdot H_S^Z + j\omega \cdot C_S^Z}{K_{Z_{pne}Z_{cai}} + K_S^Z + j \cdot H_S^Z + j\omega \cdot C_S^Z - \omega^2 M_{NS}^Z}$$

Cette expression rend compte de la résonance des masses non suspendues et de l'impédance d'entrée causée par la suspension entre le pneumatique et la caisse.

## Exemple 4

L'expression de l'exemple 3 peut être encore simplifiée si l'on veut se passer de l'effet de résonance des masses non suspendues. L'expression des fonctions de passage est alors :

$$H_{ii}(\omega) = \frac{-c_i}{\omega^2 M_{NS}^i}$$

où $C_i$ est une constante ajustée empiriquement. Ici, la seule prise en compte des masses non suspendues permet d'appréhender l'impédance d'entrée du dispositif de suspension du véhicule.

Dans les différents exemples cités, les expressions des fonctions de passage font intervenir des paramètres caractérisant le pneumatique et la suspension. On décrit maintenant des méthodes pour déterminer ces différents paramètres.

Détermination des masses non suspendues

Lorsqu'on dispose du véhicule équipé de la suspension et de l'ensemble roue-pneumatique, on peut employer la méthode de la double pesée. On excite le premier mode résonant du système de liaison au sol avec un banc dynamométrique et on mesure sa fréquence de résonance $f_1$. Puis on fixe une masse additionnelle connue $M_a$ au niveau du centre de roue et on recommence cette mesure. La fréquence de résonance $f_2$ est décalée selon la formule :

$$\frac{f_2}{f_1} = \sqrt{\frac{M_{NS}}{M_{NS} + M_a}}$$

dont on déduit $M_{NS}$.

Par ailleurs, On considère qu'il y a trois contributions dans la masse non suspendue $M_{NS}$ : une contribution de la suspension $M_S$ qui est la masse de suspension ressentie au niveau du centre de roue et qui peut dépendre de la direction, une contribution de la roue qui est sa masse totale $M_R$ pour toutes les directions, et une contribution du pneumatique $M_{iCR}$ ($i$=X, Y, Z) qui est la masse de pneumatique ressentie au niveau du centre de roue et qui peut dépendre de la direction.

La contribution du pneumatique $M_{iCR}$ a été établie de manière statistique en fonction de la masse totale du pneumatique $M_{pneu}$ et du moment d'inertie de la roue $I_{roue}$ lorsque celle-ci tourne librement autour de son axe :

$$M_{X_{CR}} = 1.4176 M_{pneu} + 10.285 I_{roue} + 0.9738$$

$$M_{Y_{CR}} = 0.51776 M_{pneu} + 0.86549$$

$$M_{Z_{CR}} = 0.79283 M_{pneu} - 0.43756$$

Ainsi, une fois la' masse non suspendue $M_{NS}$ mesurée par double pesée, une pesée de la roue et du pneu permet de remonter à la contribution propre de la suspension :

$$M_S^i = M_{NS}^i - M_{roue} - M_{i_{CR}}$$

La contribution de la suspension doit être conservée avec les autres données caractéristiques du véhicule (raideurs et amortissements de suspension) car elle est utile lorsqu'on doit estimer les masses non suspendues correspondant à un nouvel ensemble roue-pneumatique monté sur la même suspension sans disposer du véhicule et de la suspension. Dans ce cas, on effectue une pesée de la nouvelle roue et du nouveau pneumatique, on calcule la contribution du pneumatique par les formules ci-dessus et l'on y ajoute la contribution de suspension, qui n'est pas modifiée. Avantageusement, on suppose que la contribution de la suspension est isotrope.

Détermination des raideurs statiques et amortissements hystérétiques du pneumatique

Ces paramètres $K_{iCRiCR}$ et $H_{iCRiCR}$ doivent être déterminés de préférence dans des conditions de roulage, et non à l'arrêt. Ils s'obtiennent de manière classique au moyen d'un banc dynamométrique permettant de mesurer les efforts au niveau du centre de roue en réponse à des déplacements imposés, en fréquence et en amplitude, au niveau de l'aire de contact du pneumatique. On peut utiliser par exemple un moyeu dynamométrique de marque MTS (Mechanical Testing &Simulation) de la société MTS Systems Corporation.

## Détermination des fréquences et amortissements des modes propres du pneumatique

Ces paramètres $\xi_k$ et $\omega_k$ sont obtenus avec une méthode d'analyse modale connue du pneumatique. Dans le principe, on excite des vibrations dans le pneumatique, par exemple à l'aide de marteaux, et on enregistre les signaux vibratoires résultant, par exemple à l'aide d'accéléromètres. Les mesures peuvent être effectuées sur un moyeu dynamométrique de marque MTS et à l'aide d'outils de traitement du signal standards, par exemple un module de traitement du signal de marque LMS de la société LMS International.

## Détermination des raideurs et amortissements de la suspension

Ces paramètres $H_S$, $K_S$ et $C_S$ sont mesurés sur un véhicule équipé de la suspension devant être modélisée et à l'aide d'un banc dynamique, par exemple de marque MTS. Une plaque vibratoire engendre des déplacements, à fréquence et amplitude imposées, au niveau de l'aire de contact du pneumatique. Des capteurs laser enregistrent les déplacements du centre de roue. Des capteurs d'effort enregistrent simultanément les efforts transmis par la suspension à la caisse du véhicule. La rigidité complexe de la suspension dans chaque direction découle immédiatement du rapport entre l'effort transmis et le déplacement correspondant du centre de roue.

## Détermination des masses de couplage

Un modèle statistique a été développé, en faisant l'hypothèse que les masses de couplage $m_{i\leftrightarrow k}$, qui représentent la facilité avec laquelle un déplacement du centre de roue dans la direction i excite un mode propre k du pneumatique, sont corrélées aux autres paramètres caractéristiques du mode propre : sa fréquence $f_k$, son amortissement $\xi_k$ et la raideur statique $K_{iCRiCR}$ dans la direction concernée. Ce modèle fournit les masses de couplage sous la forme :

$$m_{X_{CR}\leftrightarrow r0.5} = 0.10907 M_{pneu} - 0.05173 f_{r0.5} + 0.64065 \xi_{r0.5} + 3.391.10^{-6} K_{z_{CR}z_{CR}} + 3.1505$$

$$m_{Y_{CR}\leftrightarrow T0.5} = 0.0361 M_{pneu} - 8.9815.10^{-4} f_{T0.5} + 0.43591 \xi_{T0.5} + 0.60877$$

$$m_{Z_{CR}\leftrightarrow R1.0} = 0.041869 M_{pneu} - 4.4036.10^{-3} f_{R1.0} + 0.69036 \xi_{R1.0} + 9.9969.10^{-7} K_{z_{CR}z_{CR}} + 0.68727$$

## Utilisation des fonctions de passage pour déterminer une fonction de transfert globale

Sur la figure 15, on a représenté un véhicule 25 dont on souhaite déterminer la fonction de transfert globale. Le véhicule 25 est muni d'un système de liaison au sol incluant une suspension 30 et un ensemble roue-pneumatique de référence 26 à l'emplacement avant droit. On procède en plusieurs étapes :

a) à l'aide d'un volant 28 muni d'un obstacle, l'ensemble roue-pneumatique de référence 26 est soumis à une excitation vibratoire dans des conditions de roulage déterminées (pression de gonflage, vitesse, charge statique), qui peuvent être fixes ou variables. Pendant ce temps, on mesure des grandeurs vibratoires et acoustiques à l'intérieur de l'habitacle pour caractériser le niveau de confort perçu par les passagers. Les signaux de mesure correspondants 40 sont convertis dans le domaine fréquentiel par transformée de Fourier.

b) pour le même ensemble roue-pneumatique de référence 26 et les mêmes conditions de roulage, on effectue des mesures des efforts au centre de roue à l'aide d'un outil dynamométrique 27 à support fixe, semblable à l'outil représenté sur la figure 1. Le même volant 28 muni du même obstacle est actionné dans les mêmes conditions que dans l'étape a). Les signaux de mesure correspondants $F^{SF}$ sont convertis dans le domaine fréquentiel par transformée de Fourier.

c) on détermine la matrice de passage $H_R$, supposée diagonale, correspondant au système de liaison au sol constitué de la suspension 30 et de l'ensemble roue-pneumatique de référence 26 après avoir mesuré les paramètres nécessaires.

d) à l'étape 31, on calcule le produit de cette matrice de passage par les efforts mesurés à support fixe à l'étape b), ce qui fournit une estimation $F^{SS}$ des efforts effectivement transmis entre l'ensemble roue-pneumatique de référence 26 et son support de roue dans le système de liaison au sol du véhicule 25.

e) à l'étape 32, on effectue des calculs de fonctions de transferts, par calcul de cohérence, entre les signaux enregistrés dans l'habitacle à l'étape a) et les efforts calculés à l'étape d), tous dans le domaine fréquentiel, qui exprime le rapport entre les niveaux vibratoires et acoustiques enregistrés dans l'habitacle et les efforts transmis entre la roue avant droite et son support au niveau du centre de roue, efforts qui sont à l'origine de ces niveaux vibratoires et acoustiques. Ces calculs sont effectués à l'aide d'outils de traitement du signal classiques, par exemple les logiciels de marque Matlab ou LMS. Cette fonction de transfert, schématisée par le bloc 34 caractérise l'aptitude de la caisse 33 et de la suspension 30 du véhicule 25 à transmettre les vibrations entre le support de roue avant droit et l'habitacle, indépendamment de l'ensemble roue-pneumatique qui lui est attaché. En pratique, cette fonction de transfert a autant de composantes qu'on a mesurés de signaux différents à l'étape a). Le calcul de fonction de transfert est bien connu en soi dans l'état de la technique : schématiquement, il s'agit d'une division de différents inter-spectres et auto-spectres entre eux.

En pratique, les étapes a) à e) peuvent être répétées avec les trois autres roues du véhicule 25 pour obtenir ainsi une fonction de transfert globale du véhicule caractérisant l'aptitude de la caisse 33 et de la suspension 30 du véhicule 25 à transmettre les vibrations entre chaque support de roue et l'habitacle.
La fonction de transfert globale sert d'outil de prédiction de la performance confort du véhicule 25 lorsqu'on modifie ses roues.

Utilisation des fonctions de passage pour prédire les performances d'un ensemble roue-pneumatique prototype

On se pose le problème de prédire la manière dont vont être affectés les niveaux vibratoires et acoustiques dans l'habitacle du véhicule si l'on remplace l'ensemble roue pneumatique de référence 26 par un ensemble roue-pneumatique prototype 36. On procède en plusieurs étapes :

f) pour l'ensemble roue-pneumatique prototype 36, on effectue des mesures des efforts au centre de roue à l'aide de l'outil dynamométrique 27 à support fixe, semblable à l'outil représenté sur la figure 1 et à l'aide d'un volant 29 muni d'un obstacle ou autre relief approprié. L'ensemble roue-pneumatique prototype 36 est ainsi soumis à une excitation vibratoire dans les conditions de roulage déterminées (pression de gonflage, vitesse) pour lesquelles on souhaite prédire les niveaux vibratoires et acoustiques dans l'habitacle du véhicule. Pendant la mesure, on applique sur l'ensemble roue-pneumatique prototype 36 une charge statique qui correspond à la charge qu'il recevrait s'il était monté à la position avant droite du véhicule 25. Les signaux de mesure correspondants $F'^{SF}$ sont convertis dans le domaine fréquentiel par transformée de Fourier.

g) après avoir mesuré les paramètres nécessaires de l'ensemble roue-pneumatique prototype 36, on détermine la matrice de passage $\mathbf{H_p,}$ supposée diagonale, correspondant au quart avant droit système de liaison au sol avec l'ensemble roue-pneumatique prototype 36. Dans cette étape, il n'est pas nécessaire de disposer de la suspension 30, dont on aura préalablement sauvegardé les paramètres caractéristiques.

h) à l'étape 37, on calcule le produit de cette matrice de passage par les efforts mesurés à support fixe à l'étape f), ce qui fournit une estimation $F'^{SS}$ des efforts qui seraient effectivement transmis entre l'ensemble roue-pneumatique prototype 36 et le porte-moyeu avant droit dans le système de liaison au sol du véhicule 25.

i) à l'étape 38, on calcule le produit des efforts estimés à l'étape h) par la fonction de transfert 34 obtenue à l'étape e), ou éventuellement par une fonction de transfert correspondante obtenue selon la technique antérieure. Ce calcul fournit une estimation prédictive 41 des grandeurs vibratoires et acoustiques que l'on mesurerait à l'intérieur de l'habitacle en effectuant les mesures schématisées par le bloc 39 avec le véhicule 25 équipé de l'ensemble roue-pneumatique prototype 36. L'avantage manifeste de ce procédé est de dispenser d'effectuer les mesures schématisées par le bloc 39, ces mesures étant prédites par le calcul sans qu'on ait besoin de réunir physiquement le véhicule et l'ensemble roue-pneumatique prototype 36. Il en résulte un gain de temps et de flexibilité dans les études précédant la fabrication d'un véhicule complet.

Dans l'étape f), le relief du volant 29 peut être l'obstacle qui a servi aux étapes a) et b) pour l'établissement de la fonction de transfert ou tout autre revêtement vibratoire. En pratique, les étapes f) à i) peuvent être répétées pour les trois autres positions de roue du véhicule 25 en utilisant à chaque fois la matrice de passage et la fonction de transfert associées à cette position de roue.
La matrice de passage permet de calculer les efforts transmis entre la roue et son support suspendu à partir de la mesure des efforts transmis entre la roue et son support fixe, à conditions de roulage identiques. L'utilisation de cette matrice de passage pour déterminer la fonction de transfert du véhicule (étape d) et pour prédire la performance confort du véhicule (étape h) améliore considérablement la qualité des prédictions par rapport à la technique antérieure. Utiliser une formulation analytique de la matrice de passage permet de modéliser très facilement différents ensembles roue-pneumatique et différentes suspensions, de manière bien plus économique qu'en réalisant à chaque fois une simulation numérique complète par éléments finis. Ici, il suffit à chaque fois de mesurer et d'adapter les quelques paramètres caractéristiques qui interviennent dans la modélisation de l'ensemble roue-pneumatique et de la suspension.
A l'étape g), il est possible de modifier les paramètres de la suspension pour étudier qualitativement la manière dont vont être affectés les niveaux vibratoires et acoustiques dans l'habitacle du véhicule si l'on modifie également la suspension. Seules de petites modifications peuvent être étudiées de cette manière, puisqu'on fait alors l'hypothèse que la fonction de transfert du véhicule et la déformation de l'aire de contact du pneumatique ne sont pas modifiées.

Dans les étapes d) et h), on utilise un ordinateur de type PC qui possède une entrée de signal pour entrer le signal de mesure produit par l'outil dynamométrique 27 et qui est programmé pour appliquer la matrice de passage à ce signal de mesure. La programmation de l'ordinateur est de préférence fondée sur la formulation analytique de l'exemple 1. La programmation comporte également une fonction de paramétrage de la matrice de passage permettant à l'utilisateur d'entrer les paramètres caractéristiques de l'ensemble roue-pneumatique et de la suspension, par exemple au moyen de menus déroulant à l'écran. Ces paramètres sont de préférence stockés sous la forme de fichiers de paramétrage dans un format déterminé assurant la standardisation et la portabilité des données de paramétrage. Les autres étapes de calcul, dans lesquelles on détermine ou on utilise la fonction de transfert du véhicule, sont aussi réalisées avec un ordinateur, qui peut être le même.

Les expressions de la matrice de passage présentées ci-dessus ne sont pas exhaustives et la méthode de modélisation du quart de véhicule décrite permettra à l'homme du métier de dériver, selon la précision désirée, des formulations moins raffinées ou plus raffinées, par exemple en tenant compte des termes non diagonaux.

Dans les revendications, l'article « un » ou « une » affecté à tel élément ou telle étape n'exclut pas la présence de plusieurs éléments ou de plusieurs étapes présentant les caractéristiques énoncées.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.


**Revendications**

**1.** Procédé de détermination d'un effort transmis entre une roue de véhicule et un support de roue, ledit procédé comportant les étapes consistant à :

monter ladite roue (36) à pivotement sur un support de roue (27) comprenant un moyen dynamomé trique à axe fixe, ladite comprenant un moyeu dynamométrique à axe fixe, ladite roue étant munie d'un pneumatique, appuyer ledit pneumatique contre un moyen d'excitation (29),
mesurer un effort à support fixe (F'$^{SF}$) qui est transmis entre ladite roue et ledit support de roue lorsqu'on excite ledit pneumatique avec ledit moyen d'excitation, ledit support de roue (27) étant fixé dans au moins une direction (X, Y, Z) par rapport audit moyen d'excitation,
**caractérisé par** l'étape consistant à calculer (37), en fonction dudit effort à support fixe, un effort à support suspendu (F'$^{SS}$) qui serait transmis entre ladite roue et un support de roue (30) présentant un degré de liberté de suspension dans au moins une dite direction par rapport audit moyen d'excitation.

**2.** Procédé selon la revendication 1, **caractérisé par le fait que** ledit effort à support suspendu est calculé en fonction de la masse non suspendue d'un système de liaison au sol incluant l'ensemble roue-pneumatique (36) et un support de roue lié à un dispositif de suspension (30).

**3.** Procédé selon la revendication 2, **caractérisé par le fait que** ledit effort à support suspendu est calculé en fonction d'une fréquence de résonance et/ou d'un coefficient d'amortissement caractéristiques d'un mode propre dudit système de liaison au sol.

**4.** Procédé selon la revendication 2 ou 3, **caractérisé par le fait que** ledit effort à support suspendu est calculé en fonction d'une raideur et/ou d'un amortissement dudit dispositif de suspension (30).

**5.** Procédé selon l'une des revendications 1 à 4, **caractérisé par le fait que** ledit effort à support suspendu est calculé en fonction d'une raideur et/ou d'un amortissement dudit pneumatique (2).

**6.** Procédé selon l'une des revendications 1 à 5, **caractérisé par le fait que** ledit effort à support suspendu est calculé en fonction d'une fréquence de résonance et/ou d'un coefficient d'amortissement caractéristiques d'un mode propre dudit pneumatique (2).

**7.** Procédé selon la revendication 6, **caractérisé par le fait que** ledit effort à support suspendu est calculé aussi en fonction d'un paramètre de couplage entre ledit mode propre du pneumatique et un déplacement du centre de roue.

**8.** Procédé selon l'une des revendications 1 à 7, **caractérisé par le fait que** ledit effort à support suspendu ($F'^{SS}$) est calculé dans le domaine fréquentiel en multipliant ledit effort à support fixe ($F'^{SF}$) par une matrice de passage ($H_p$).

**9.** Procédé selon la revendication 8, **caractérisé par le fait que** ladite matrice de passage ($H_p$) est diagonale lorsque lesdits efforts sont exprimés dans un repère correspondant aux directions principales (X, Y, Z) du véhicule (25).

**10.** Procédé selon la revendication 9, **caractérisé par le fait qu'**au moins un coefficient diagonal de ladite matrice de passage présente une évolution globalement décroissante (18, 19) au-dessus d'une certaine fréquence.

**11.** Procédé selon la revendication 9 ou 10, **caractérisé par le fait qu'**au moins un coefficient diagonal de ladite matrice de passage présente un pic (14, 15) au niveau d'une fréquence de résonance du système de liaison au sol.

**12.** Procédé selon l'une des revendications 9 à 11, **caractérisé par le fait qu'**au moins un coefficient diagonal de ladite matrice de passage présente, sur une portion du spectre, un minimum et un maximum adjacents (16, 17) qui représentent un décalage fréquentiel d'un mode propre du pneumatique.

**13.** Utilisation du procédé selon l'une des revendications 1 à 12 pour déterminer une fonction de transfert d'un véhicule (25) équipé d'un système de liaison au sol incluant un support de roue relié à une caisse (33) par l'intermédiaire d'un dispositif de suspension (30) et un ensemble roue-pneumatique de référence (26) monté sur ledit support de roue, **caractérisée par** les étapes consistant à :

mesurer un niveau de bruit et/ou de vibration (40) à l'intérieur du véhicule lorsque le pneumatique dudit ensemble de référence est excité dans des conditions de roulage déterminées,
effectuer (31) le procédé selon l'une des revendications 1 à 12 avec ledit ensemble roue-pneumatique de référence (26) excité dans lesdites conditions de roulage déterminées pour calculer ledit effort à support suspendu ($F^{SS}$) en tant qu'effort transmis entre ledit ensemble roue-pneumatique de référence et ledit support de roue du système de liaison au sol,
déterminer ladite fonction de transfert (34) dans le domaine fréquentiel (32) entre ledit niveau de bruit et/ou de vibration (40) mesuré et ledit effort calculé ($F^{SS}$).

**14.** Utilisation du procédé selon l'une des revendications 1 à 12 pour prédire la performance confort d'un véhicule (25) devant être équipé d'un système de liaison au sol incluant un support de roue relié à une caisse par l'intermédiaire d'un dispositif de suspension (30) et un ensemble roue-pneumatique prototype (36) monté sur ledit support de roue, **caractérisée par** les étapes consistant à :

effectuer (37) le procédé selon l'une des revendications 1 à 12 avec ledit ensemble roue-pneumatique prototype (36) pour calculer ledit effort à support suspendu ($F'^{SS}$) en tant qu'effort transmis entre ledit ensemble roue-pneumatique prototype et ledit support de roue du système de liaison au sol,
multiplier (38) ledit effort calculé par une fonction de transfert (34) dudit véhicule dans le domaine fréquentiel pour obtenir un niveau de bruit et/ou de vibration (41) prévu à l'intérieur du véhicule.

**15.** Utilisation selon la revendication 14, **caractérisée par le fait que** ladite fonction de transfert (34) est déterminée par l'utilisation selon la revendication 13.

**16.** Appareil de traitement de données, **caractérisé par le fait qu'**il comporte une interface pour entrer un signal d'effort à support fixe ($F^{SF}$, $F'^{SF}$) représentant un effort transmis entre un support de roue (27) fixé dans au moins une direction par rapport à un moyen d'excitation (28, 29) et une roue de véhicule (26, 36) montée à pivotement sur ledit support de roue et munie d'un pneumatique appuyé contre ledit moyen d'excitation, et des moyens de calcul programmés pour mettre en oeuvre un modèle fonctionnel de suspension apte à calculer, à partir dudit signal d'effort à support fixe, un signal d'effort à support suspendu ($F^{SS}$, $F'^{SS}$) représentant un effort qui serait transmis entre ladite roue (26, 36) et un support de roue (30) présentant un degré de liberté de suspension dans au moins une dite direction par rapport audit moyen d'excitation.

**17.** Programme d'ordinateur comportant des codes d'instructions propres à être lus ou stockés sur un support et aptes à être exécutés par un ordinateur pour mettre en oeuvre un modèle fonctionnel de suspension apte à calculer, à partir d'un signal d'effort à support fixe ($F^{SF}$, $F'^{SF}$) représentant un effort transmis entre un support de roue (27) fixé dans au moins une direction par rapport à un moyen d'excitation (28, 29) et une roue de véhicule (26, 36) montée à pivotement sur ledit support de roue et munie d'un pneumatique appuyé contre ledit moyen d'excitation, un signal d'effort à support suspendu (F$^{SS}$, F'$^{SS}$) représentant un effort qui serait transmis entre ladite roue (26, 36) et un support de roue (30) présentant un degré de liberté de suspension dans au moins une dite direction par rapport audit moyen d'excitation.

**Claims**

1. Method for determining an effort transmitted between the wheel of a vehicle and a wheel support, the said method comprising the steps consisting of:

   mounting the said wheel (36) pivotably on a wheel support (27) having a dynamometric hub with a fixed axis, the said wheel being provided with a tyre;
   pressing the said tyre against an excitation means (29);
   measuring a fixed support effort (F'$^{SF}$) which is transmitted between the said wheel and the said wheel support when the said tyre is excited with the said excitation means, the said wheel support (27) being fixed in at least one direction (X,Y,Z) in relation to the said excitation means, **characterised by** the step consisting in calculating (37), on the basis of the said fixed support effort, a suspended support effort (F'$^{SS}$) which would be transmitted between the said wheel and a wheel support (30) having a degree of freedom of suspension in at least one said direction in relation to the said excitation means.

2. Method according to claim 1, **characterised in that** the said suspended support effort is calculated on the basis of the non-suspended mass of a ground contact system which includes the tyre-wheel assembly (36) and a wheel support which is connected to a suspension device (30).

3. Method according to claim 2, **characterised in that** the said suspended support effort is calculated on the basis of a resonance frequency and/or a shock-absorption coefficient which are characteristic of a specific mode of the said ground contact system.

4. Method according to claim 2 or claim 3, **characterised in that** the said suspended support effort is calculated on the basis of a rigidity and/or a shock-absorption of the said suspension device (30).

5. Method according to any one of claims 1 to 4,
   **characterised in that** the suspended support effort is calculated on the basis of a rigidity and/or a shock-absorption of the said tyre (2).

6. Method according to any one of claims 1 to 5,
   **characterised in that** the said suspended support effort is calculated on the basis of a resonance frequency and/or an absorption coefficient which are characteristic of a specific mode of the said tyre (2).

7. Method according to claim 6, **characterised in that** the said suspended support effort is also calculated on the basis of a parameter of coupling between the said specific mode of the tyre and a displacement of the wheel centre.

8. Method according to any one of claims 1 to 7
   **characterised in that** the said suspended force effort (F'$^{SS}$) is calculated in the frequential domain by multiplying the said fixed support effort (F'$^{SF}$) by a passage matrix (H$_p$).

9. Method according to claim 8, **characterised in that** the said passage matrix (H$_p$) is diagonal when the said efforts are expressed in a reference corresponding to the main directions (X,Y,Z) of the vehicle (25).

10. Method according to claim 9, **characterised in that** at least one diagonal coefficient of the said passage matrix has development which decreases globally (18, 19) above a certain frequency.

11. Method according to claim 9 or claim 10, **characterised in that** at least one diagonal coefficient of the passage matrix has a peak (14, 15) at the level of a resonance frequency of the ground contact system.

12. Method according to any one of claims 9 to 11,
    **characterised in that** at least one diagonal coefficient of the said passage matrix has, on a portion of the spectrum, an adjacent minimum and maximum (16, 17) which represent frequential offsetting of a specific mode of the tyre.

**13.** Use of the method according to any one of claims 1 to 12 in order to determine a transfer function of a vehicle (25) equipped with a ground contact system which includes a wheel support connected to a body (33) by means of a suspension device (30) and a reference tyre-wheel assembly (26) which is fitted on the said wheel support, **characterised by** the steps consisting of:

measuring a level of noise and/or vibration (40) inside the vehicle when the tyre of the said reference tyre-wheel assembly is excited in specific rolling conditions;
implementing (31) the method according to any one of claims 1 to 12 with the said reference tyre-wheel assembly (26) excited in the said rolling conditions which are determined such as to calculate the said suspended support effort ($F^{SS}$) as effort transmitted between the said reference tyre-wheel assembly and the said wheel support of the ground contact system;
determining the said transfer function (34) in the frequential domain (32) between the said level of noise and/or vibration (40) measured and the said effort calculated ($F^{SS}$).

**14.** Use of the method according to any one of claims 1 to 12 in order to predict the comfort performance of a vehicle (25) to be equipped with a ground contact system which includes a wheel support connected to a body by means of a suspension device (30) and a prototype tyre-wheel assembly (36) which is fitted on the said wheel support, **characterised by** the steps consisting of:

implementing (37) the method according to any one of claims 1 to 12 with the said prototype tyre-wheel assembly (36) in order to calculate the said suspended support effort ($F^{SS}$) as effort transmitted between the said prototype tyre-wheel assembly and the said wheel support of the ground contact system; and
multiplying (38) the said effort calculated by a transfer function (34) of the said vehicle in the frequential domain in order to obtain a level of noise and/or vibration (41) foreseen in the interior of the vehicle.

**15.** Use according to claim 14, **characterised in that** the said transfer function (34) is determined by use according to claim 13.

**16.** Data processing device, **characterised in that** it comprises an interface to enter a fixed support effort signal ($F^{SF}$, $F'^{SF}$) representing an effort transmitted between a wheel support (27) which is fixed in at least one direction relative to an excitation means (28, 29) and a vehicle wheel (26, 36) which is fitted pivotably on the said wheel support and is provided with a tyre which is pressed against the said excitation means, and calculation means which are programmed to implement a functional suspension model which, on the basis of the said fixed support effort signal, can calculate a suspended support effort signal ($F^{SS}$,$F'^{SS}$) representing an effort which would be transmitted between the said wheel (26, 36) and a wheel support (30) having a degree of freedom of suspension in at least one said direction relative to the said excitation means.

**17.** Computer programme comprising instruction codes which can be read or stored on a support and can be executed by a computer in order to implement a functional suspension model which, on the basis of a fixed support effort signal ($F^{SF}$,$F'^{SF}$) representing an effort transmitted between a fixed wheel support (27) in at least one direction relative to an excitation means (28, 29) and a vehicle wheel (26, 36) which is fitted pivotably on the said wheel support and is provided with a tyre which is pressed against the said excitation means, can calculate a suspended support effort signal ($F^{SS}$,$F'^{SS}$) representing an effort which would be transmitted between the said wheel (26, 36) and a wheel support (30) having a degree of freedom of suspension in at least one said direction relative to the said excitation means.

**Patentansprüche**

**1.** Verfahren zur Ermittlung einer Beanspruchung, die zwischen einem Rad eines Fahrzeugs und einer Radaufhängung übertragen wird,
wobei das Verfahren folgende Schritte umfasst:

Montieren des Rades (36) in schwenkbarer Aufhängung an einer Radaufhängung (27), die eine Kraftmessnabe mit fester Achse aufweist, wobei das Rad mit einem Reifen ausgerüstet ist, Abstützen des Reifens auf einer Erregungseinrichtung (29), Messen einer Beanspruchung bei festeingestellter Radaufhängung ($F'^{SF}$), die zwischen dem Rad und der Radaufhängung übertragen wird, wenn der Reifen mit der Erregungseinrichtung erregt wird, wobei die Radaufhängung (27) in mindestens einer Richtung (X, Y, Z) in Bezug auf die Erregungseinrichtung festeingestellt ist,
**gekennzeichnet durch** einen Schritt, der besteht in der Berechnung (37) einer Beanspruchung bei federnder Radaufhängung (F'SS) als Funktion der Belastung bei festeingestellter Radaufhängung, die zwischen dem Rad und einer Radaufhängung (30) übertragen würde, die in mindestens einer der genannten Richtungen in Bezug auf die Erregungseinrichtung einen Freiheitsgrad der Aufhängung besitzt.

2. Verfahren nach Anspruch 1, **dadurch gekennzeichnet, dass** die Beanspruchung bei federnder Radaufhängung in Abhängigkeit von der ungefederten Masse eines Systems der Verbindung mit dem Untergrund berechnet wird, das die Einheit aus Rad und Reifen (36) und eine Radaufhängung, die mit einer Radaufhängungsvorrichtung (30) verbunden ist, einschließt.

3. Verfahren nach Anspruch 2, **dadurch gekennzeichnet, dass** die Beanspruchung bei federnder Radaufhängung als Funktion einer Resonanzfrequenz und/oder eines Dämpfungskoeffizienten berechnet wird, die für eine Eigenschwingung des Systems der Verbindung mit dem Untergrund charakteristisch sind.

4. Verfahren nach Anspruch 2 oder 3, **dadurch gekennzeichnet, dass** die Beanspruchung bei federnder Radaufhängung in Abhängigkeit von einer Steifigkeit und/oder einer Dämpfung der Radaufhängungsvorrichtung (30) berechnet wird.

5. Verfahren nach einem der Ansprüche 1 bis 4, **dadurch gekennzeichnet, dass** die Beanspruchung bei federnder Radaufhängung in Abhängigkeit von einer Steifigkeit und/oder einer Dämpfung des Reifens (2) berechnet wird.

6. Verfahren nach einem der Ansprüche 1 bis 5, **dadurch gekennzeichnet, dass** die Beanspruchung bei federnder Radaufhängung als Funktion einer Resonanzfrequenz und/oder eines Dämpfungskoeffizienten berechnet wird, die für eine Eigenschwingung des Reifens (2) charakteristisch sind.

7. Verfahren nach Anspruch 6, **dadurch gekennzeichnet, dass** die Beanspruchung bei federnder Radaufhängung auch in Abhängigkeit von einem Kopplungsparameter der Kopplung zwischen der Eigenschwingung des Reifens und einer Verlagerung des Zentrums des Rades berechnet wird.

8. Verfahren nach einem der Ansprüche 1 bis 7, **dadurch gekennzeichnet, dass** die Beanspruchung bei federnder Aufhängung (F'SS) in dem Frequenzbereich berechnet wird, indem die Beanspruchung bei festeingestellter Radaufhängung (F'SF) mit einer Wegmatrix (Hp) multipliziert wird.

9. Verfahren nach Anspruch 8, **dadurch gekennzeichnet, dass** die Wegmatrix (Hp) diagonal ist, wenn die Beanspruchungen in einem Eintragssystem ausgedrückt werden, das den Hauptrichtungen (X, Y, Z) des Fahrzeugs (25) entspricht.

10. Verfahren nach Anspruch 9, **dadurch gekennzeichnet, dass** mindestens ein diagonaler Koeffizient der Wegmatrix oberhalb einer bestimmten Frequenz einen global abnehmenden Verlauf aufweist.

11. Verfahren nach Anspruch 9 oder 10, **dadurch gekennzeichnet, dass** mindestens ein diagonaler Koeffizient der Wegmatrix einen Peak (14, 15) bei einer Resonanzfrequenz des Systems der Verbindung mit dem Untergrund aufweist.

12. Verfahren nach einem der Ansprüche 9 bis 11, **dadurch gekennzeichnet, dass** mindestens ein diagonaler Koeffizient der Wegmatrix in einem Bereich des Spektrums ein Minimum und ein Maximum (16, 17) aufweist, die aneinander angrenzen und eine Frequenzverschiebung einer Eigenschwingung des Reifens darstellen.

13. Anwendung des Verfahrens nach einem der Ansprüche 1 bis 12 zur Ermittlung einer Übertragungsfunktion eines Fahrzeugs (25), das mit einem System der Verbindung mit dem Untergrund ausgerüstet ist, das eine Radaufhängung, die über eine Radaufhängungsvorrichtung (30) mit einer Karosserie (33) verbunden ist, sowie eine Bezugseinheit (26) aus Rad und Reifen, die an der Radaufhängung angebracht ist, umfasst, **gekennzeichnet durch** folgende Schritte:

Messen eines Geräuschniveaus und/oder eines Vibrationsniveaus (40) im Inneren des Fahrzeugs, wenn der Reifen der Bezugseinheit aus Rad und Reifen unter vorgegebenen Laufbedingungen erregt wird,
Durchführen (31) des Verfahrens nach einem der Ansprüche 1 bis 12 mit der Bezugseinheit aus Rad und Reifen (26), der unter diesen vorgegebenen Laufbedingungen erregt wird, um die Beanspruchung federnder Radaufhängung ($F^{SS}$) als die Beanspruchung zu berechnen, die zwischen der Bezugseinheit aus Rad und Reifen und der Radaufhängung des Systems der Verbindung mit dem Untergrund übertragen wird,
Ermitteln der Übertragungsfunktion (34) in dem Frequenzbereich (32) zwischen dem gemessenen Geräuschniveau und/oder dem gemessenen Vibrationsniveau (40) und der berechneten Beanspruchung ($F^{SS}$).

14. Anwendung des Verfahrens nach einem der Ansprüche 1 bis 12 zur Vorhersage des Komfortverhaltens eines Fahrzeugs (25) vor der Ausrüstung mit einem System der Verbindung mit dem Untergrund, das eine Radaufhängung, die über eine Radaufhängungsvorrichtung (30) mit einer Karosserie verbunden ist, und eine Prototypeinheit aus Rad und Reifen (36), die an der Radaufhängung angebracht ist, umfasst, **gekennzeichnet durch** folgende Schritte:

    Durchführen (37) des Verfahrens nach einem der Ansprüche 1 bis 12 mit der Prototypeinheit aus Rad und Reifen (36), um die Beanspruchung bei federnder Radaufhängung ($F'^{SS}$) als die Beanspruchung zu berechnen, die zwischen der Prototypeinheit aus Rad und Reifen und der Radaufhängung des Systems der Verbindung mit dem Untergrund übertragen wird,
    Multiplizieren (38) der berechneten Beanspruchung mit einer Übertragungsfunktion (34) des Fahrzeugs in dem Frequenzbereich zum Erhalt eines voraussichtlichen Geräuschniveaus und/oder Vibrationsniveaus (41) im Inneren des Fahrzeugs.

15. Anwendung nach Anspruch 14, **dadurch gekennzeichnet, dass** die Übertragungsfunktion (34) durch die Anwendung nach Anspruch 13 ermittelt wird.

16. Vorrichtung zur Datenverarbeitung, **dadurch gekennzeichnet, dass** sie aufweist:

    eine Schnittstelle zur Eingabe eines Signals einer Beanspruchung bei festeingestellter Radaufhängung ($F^{SF}$, $F'^{SF}$), das eine Beanspruchung darstellt, die zwischen einer Radaufhängung (27), die in mindestens einer Richtung in Bezug auf eine Erregungseinrichtung (28, 29) festeingestellt ist, und einem Rad des Fahrzeugs (26, 36), das in einer schwenkbaren Aufhängung an der Radaufhängung angebracht und mit einem Reifen ausgerüstet ist, der auf der Erregungseinrichtung abgestützt ist, übertragen wird, und
    eine programmierte Recheneinrichtung zur Ausführung eines Radaufhängungs-Funktionsmodells, das geeignet ist, ausgehend von dem Signal der Beanspruchung bei festeingestellter Radaufhängung, ein Signal der Beanspruchung bei federnder Radaufhängung ($F^{SS}$, $F'^{SS}$) zu berechnen, das eine Beanspruchung darstellt, die zwischen dem Rad (26, 36) und
    einer Radaufhängung (30) übertragen würde, die in mindestens einer der genannten Richtungen in Bezug auf die Erregungseinrichtung einen Freiheitsgrad der Aufhängung besitzt.

17. Computerprogramm, das Befehlscodes aufweist, die auf einem Träger gelesen oder gespeichert werden können und dazu geeignet sind, von einem Computer ausgeführt zu werden, um ein Radaufhängungs-Funktionsmodell auszuführen, das geeignet ist, ausgehend von einem Signal der Beanspruchung bei festeingestellter Radaufhängung ($F^{SF}$, $F'^{SF}$), das eine Beanspruchung darstellt, die zwischen einer Radaufhängung (27), die in mindestens einer Richtung in Bezug auf eine Erregungseinrichtung (28, 29) festeingestellt ist, und einem Rad des Fahrzeugs (26, 36), das in einer schwenkbaren Aufhängung an der Radaufhängung angebracht und mit einem Reifen ausgerüstet ist, der auf der Erregungseinrichtung abgestützt ist, übertragen wird, ein Signal der Beanspruchung bei federnder Radaufhängung ($F^{SS}$, $F'^{SS}$) zu berechnen, das eine Beanspruchung darstellt, die zwischen dem Rad (26, 36) und einer Radaufhängung (30) übertragen würde, die in mindestens einer der genannten Richtungen in Bezug auf die Erregungseinrichtung einen Freiheitsgrad der Aufhängung besitzt.

FIG.1

ART ANTERIEUR

FIG.2

FIG.3

FIG.4

FIG.5

FIG.6

FIG.7

FIG.8

FIG.9

FIG.10

FIG.11

FIG.12

FIG.13

FIG.14

FIG.15

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 014589 A
- FR 2819589 A
- US 5003819 A
- WO 0104589 A

**Littérature non-brevet citée dans la description**

- **R.R. CRAIG ; M.C.C. BAMPTON.** Coupling of Substructures for Dynamic Analysis. *AIAA Journal,* Juillet 1968, vol. 6